# EUROPÄISCHE PATENTSCHRIFT

(11) **EP 0 886 870 B1**
(45) Veröffentlichungstag und Bekanntmachung des Hinweises auf die Patenterteilung: **05.02.2003**
(21) Anmeldenummer: 97908213.8
(22) Anmeldetag: 11.03.1997
(51) Int. Cl.: G21C 19/20, G21C 19/00

(54) **VERFAHREN ZUM ENTSORGEN EINER IN EINEM REAKTORDRUCKBEHÄLTER EINER KERNREAKTORANLAGE ANGEORDNETEN KOMPONENTE**
METHOD OF REMOVING A COMPONENT FROM THE PRESSURE VESSEL OF A NUCLEAR REACTOR
PROCEDE POUR ENLEVER UN COMPOSANT DISPOSE DANS LA CUVE SOUS PRESSION DU REACTEUR D'UNE CENTRALE NUCLEAIRE

(30) Priorität: 15.03.1996 DE 19610102
(43) Veröffentlichungstag der Anmeldung: 30.12.1998
(73) Patentinhaber: Framatome ANP GmbH, 91050 Erlangen (DE)
(72) Erfinder: MEIER-HYNEK, Konrad, D-91074 Herzogenaurach (DE); REIMER, Gerd, D-91315 Höchstadt (DE)
(74) Vertreter: Mörtel & Höfner
(86) Internationale Anmeldenummer: EP9701230
(87) Internationale Veröffentlichungsnummer: WO97035321

(56) Entgegenhaltungen:
- EP-A- 0 404 428
- EP-A- 0 404 429
- DE-C- 4 445 168
- FR-A- 2 585 870
- FR-A- 2 724 754
- FR-A- 2 724 755
- US-A- 4 859 404

## Beschreibung

Die Erfindung bezieht sich auf ein Verfahren zum Entsorgen einer in einem Reaktordruckbehälter einer Kernreaktoranlage angeordneten Komponente.

Im Laufe des Betriebs einer Kernreaktoranlage können Schäden an Anlagenteilen oder Komponenten auftreten, die es notwendig machen, diese Komponenten auszutauschen. Die alten Komponenten müssen dann ausgebaut und entsorgt werden. Insbesondere bei Komponenten des Primärkreises der Kernreaktoranlage ist es notwendig, die ausgebauten Komponenten in einem für den Weitertransport geeigneten abgeschirmten Behälter unterzubringen. Diese Arbeiten, d.h. der Ausbau und das Umsetzen der alten Komponente in den abgeschirmten Behälter, sind aufgrund der radioaktiv kontaminierten Oberflächen mit einer erheblichen Dosisbelastung des Arbeitspersonals verbunden. Dies ist insbesondere bei großvolumigen Komponenten der Fall, die in einem Reaktordruckbehälter in der Nähe der Brennelemente eingebaut sind, beispielsweise das im Reaktordruckbehälter einer Druckwasserreaktoranlage zur Aufnahme der Brennelemente eingebaute untere Kerngerüst.

In der deutschen Offenlegungsschrift 36 26 207 ist ein Verfahren zum Austausch innerer Einbauten eines Reaktordruckbehälters offenbart, bei dem eine neben dem Reaktordruckbehälter bereitgestellte, vorgefertigte großvolumige Komponente in den mit Wasser gefluteten Reaktordruckbehälter eingesetzt und eingepaßt wird. Der Ausbau der radioaktiv kontaminierten alten oder verbrauchten Komponente ist in dieser Patentanmeldung nicht näher beschrieben. Es wird lediglich erläutert, daß zum Herausnehmen dieser Komponente aus dem Reaktordruck behälter das Reaktorbecken, in dem sich der Reaktordruckbehälter befindet, vorher mit Wasser geflutet wird.

Der Erfindung liegt nun die Aufgabe zugrunde, ein Verfahren zum Entsorgen einer in einem Reaktordruckbehälter einer Kernreaktoranlage angeordneten Komponente anzugeben, mit dem ein Umsetzen in einen zum Weitertransport vorgesehenen abgeschirmten Behälter bei möglichst geringer Dosisbelastung des Arbeitspersonals möglich ist.

Die genannte Aufgabe wird gelöst mit den Merkmalen des Patentanspruches 1.

Das Verfahren zum Entsorgen einer in einem Reaktordruckbehälter einer Kernreaktoranlage angeordneten Komponente, insbesondere eines unteren Kerngerüstes einer Druckwasserreaktoranlage, umfaßt folgende Verfahrensschritte:
a) Über dem geöffneten und in einem gefluteten Reaktorbecken angeordneten Reaktordruckbehälter wird ein mit einer unteren Öffnung versehenes oberes Teil eines zum Weitertransport vorgesehenen Behälters angeordnet, das sich wenigstens mit einem Teil seines Innenraumes unterhalb des Wasserspiegels des gefluteten Reaktorbeckens befindet,
b) die Komponente wird mit einem Hebezeug aufgenommen, durch die Öffnung in das obere Teil des Behälters angehoben, und
c) zu einem oben offenen und neben dem Reaktordruckbehälter und im gefluteten Reaktorbecken angeordneten unteren Teil des Behälters transportiert wird und auf diesen aufgesetzt,
d) das obere Teil wird mit dem unteren Teil zum Behälter zusammengefügt, so daß die Komponente im Behälter eingeschlossen ist.

Durch diese Maßnahme wird verhindert, daß die Komponente während des Umsetzens von dem geöffneten Reaktordruckbehälter in den zum Weitertransport vorgesehenen Behälter aus dem gefluteten Reaktorbecken herausgehoben werden muß. Dadurch wird die Dosisbelastung des Bedienpersonals erheblich verringert.

In einer vorteilhaften Ausgestaltung der Erfindung wird durch eine Öffnung des oberen Teiles eine Tragkonstruktion des Hebezeugs geführt und an der Komponente befestigt. Durch diese Maßnahme kann als Hebezeug zum Anheben der Komponente der im Containment fest installierte Gebäudekran benutzt werden.

Vorzugsweise wird die Öffnung des oberen Teils des Behälters vor dem Transport zu seinem unteren Teil mit einem Deckel verschlossen. Dadurch wird die Dosisbelastung des Bedienpersonals weiter verringert.

In einer weiteren Ausgestaltung der Erfindung wird im Behälter eingeschlossenes Wasser über eine im unteren Teil des Behälters angeordnete verschließbare Öffnung in das Reaktorbekken abgelassen. Dadurch wird der Weitertransport des die Komponente enthaltenden Behälters erleichtert.

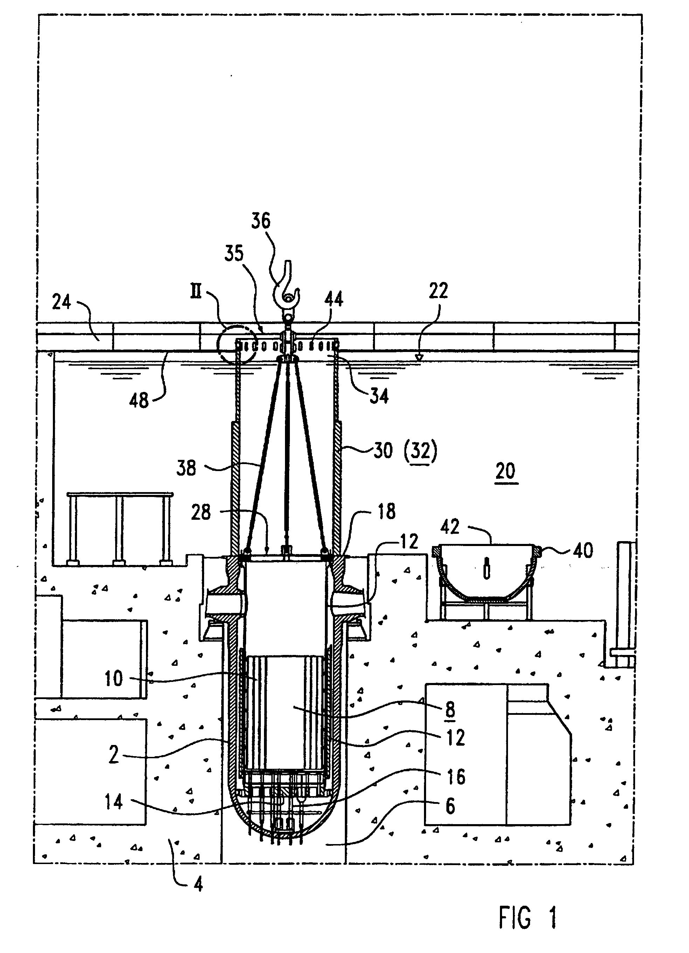

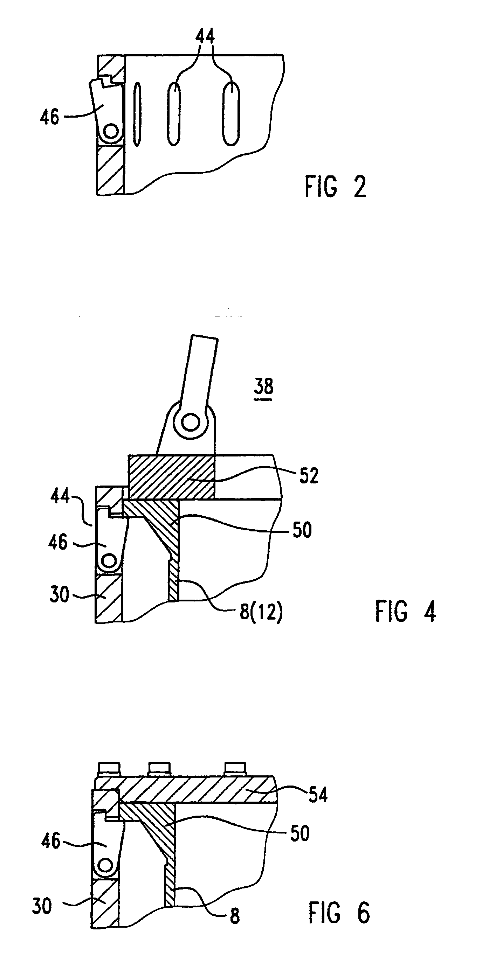

Zur weiteren Erläuterung der Erfindung wird auf das Ausführungsbeispiel der Zeichnung verwiesen, in deren Figuren 1, 3, 5, und 7 die einzelnen Verfahrensschritte zum Entsorgen eines unteren Kerngerüsts eines Reaktordruckbehälters in einer Schnittdarstellung durch ein den Reaktordruckbehälter enthaltendes Teil einer Kernreaktoranlage veranschaulicht ist. Figuren 2, 4 und 6 zeigen jeweils vergrößerte Ausschnitte des oberen Randes des Behälters in verschiedenen Verfahrensschritten.

Gemäß **FIG 1** ist ein Reaktordruckbehälter 2 in einer von Betonwänden 4 umgebenen Reaktorgrube 6 angeordnet. Im Reaktordruckbehälter 2 befindet sich eine großvolumige Komponente 8, im Ausführungsbeispiel das untere Kerngerüst, das als eine Einheit ein Kerngitter 10, einen Kernbehälter 12 sowie eine untere Gitterplatte 14 mit Abstützungen 16 umfaßt. Diese Komponente 8 hat eine Längsausdehnung, die in etwa der Ausdehnung des Reaktordruckbehälters 2 von seinem Boden bis zu seinem Deckelflansch 18 in Achsrichtung entspricht.

Die Reaktorgrube 6 ist Teil eines Reaktorbeckens 20, das für die Arbeiten am offenen Reaktordruckbehälter 2 bis zur Höhe 22 einer Brücke 24 geflutet ist.

Auf dem Deckelflansch 18 ist ein unten mit einer Öffnung 28 versehenes oberes Teil 30 eines Behälters 32 abgesetzt, das nur mit seinem oberen Rand 34 über den Wasserspiegel 22 hinausragt. Dieses obere Teil 30 ist oben mit einer Öffnung 35 versehen, so daß eine an einem Kranhaken 36 eines in der Figur nicht näher dargestellten Gebäudekrans eingehängte Tragkonstruktion 38 hindurchgeführt ist, die im Ausführungsbeispiel mehrere Tragseile umfaßt, die am oberen Rand der Komponente 8 eingehängt werden. Im Ausführungsbeispiel hat das obere Teil 30 im wesentlichen die Gestalt eines an seinen Stirnseiten offenen Hohlzylinders, um sowohl von unten als auch von oben möglichst freie Zugänglichkeit zu gewährleisten.

Auf dem Boden des Reaktorbeckens 20 ist neben dem Reaktordruckbehälter 2 ein kalottenförmiges unteres Teil 40 des Behälters 32 abgestellt. Dieses untere Teil 40 ist oben offen und mit seiner Oberkante 42 etwa annähernd in gleicher Höhe wie der Deckelflansch 18 angeordnet.

Der obere Rand 34 des oberen Teils 30 hat an seinem Umfang verteilt eine Vielzahl von Ausnehmungen 44, in denen jeweils gemäß **FIG 2** Klinken 46 angeordnet sind, die in das Innere dieses oberen Teils 30 geschwenkt werden können. Da der obere Rand 34 über dem Wasserspiegel 22 angeordnet ist, können die Klinken 46 manuell von einer Hilfsbrücke 48 aus bedient werden.

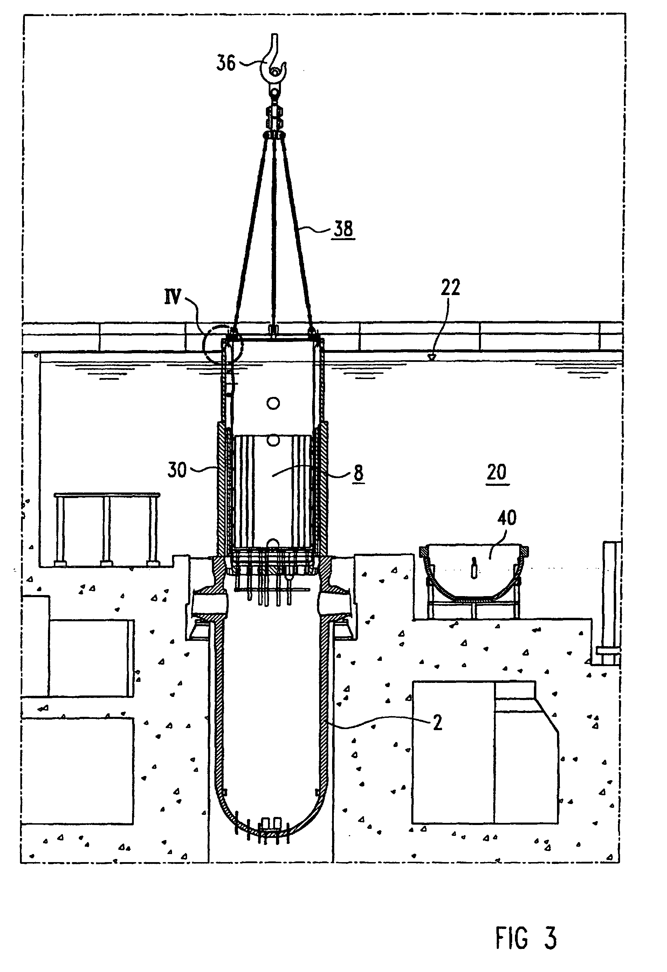

In **FIG 3** ist zu erkennen, wie die Komponente 8 mit Hilfe der durch das obere Teil 30 hindurchgeführten und am Gebäudekran eingehängten Tragkonstruktion 38 in das obere Teil 30 angehoben, d. h. von oben in das obere Teil 30 hineingezogen wird.

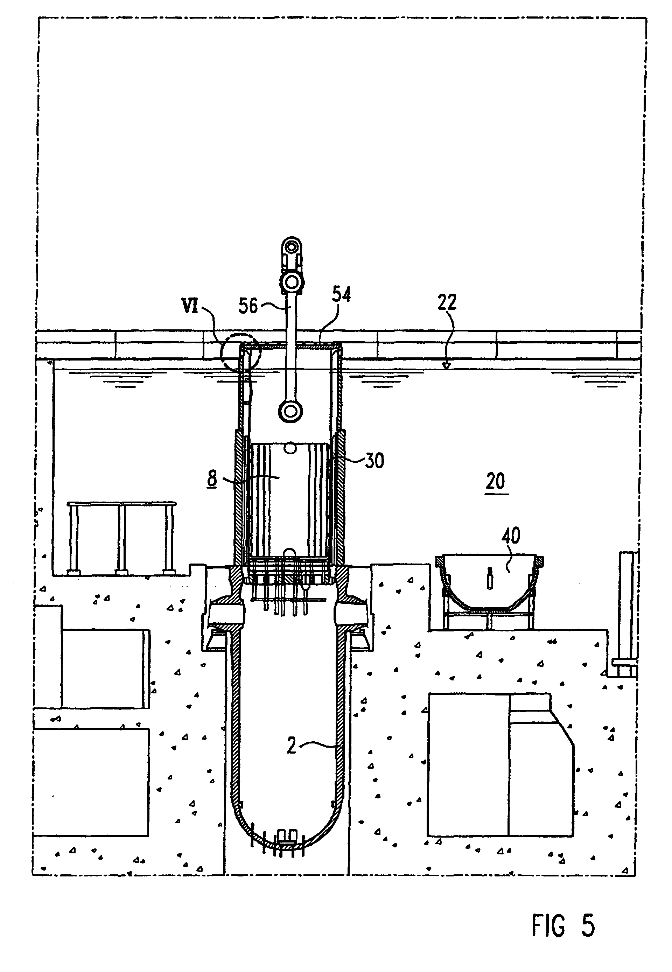

Gemäß **FIG 4** weist die Komponente 8 an ihrem oberen Rand einen Flansch oder eine Schulter 50 auf, die für Transportzwecke mit einer Hebetraverse 52 verschraubt ist, an der die Tragkonstruktion 38 fixiert ist. Die Komponente 8 wird mit der Unterkante ihrer Schulter 50 bis an die innere Oberkante der Ausnehmungen 44 herangeführt. Anschließend werden die Klinken 46 nach innen geschwenkt, so daß sie die Schulter 50 untergreifen und auf diese Weise die Komponente 8 im oberen Teil 30 fixieren.

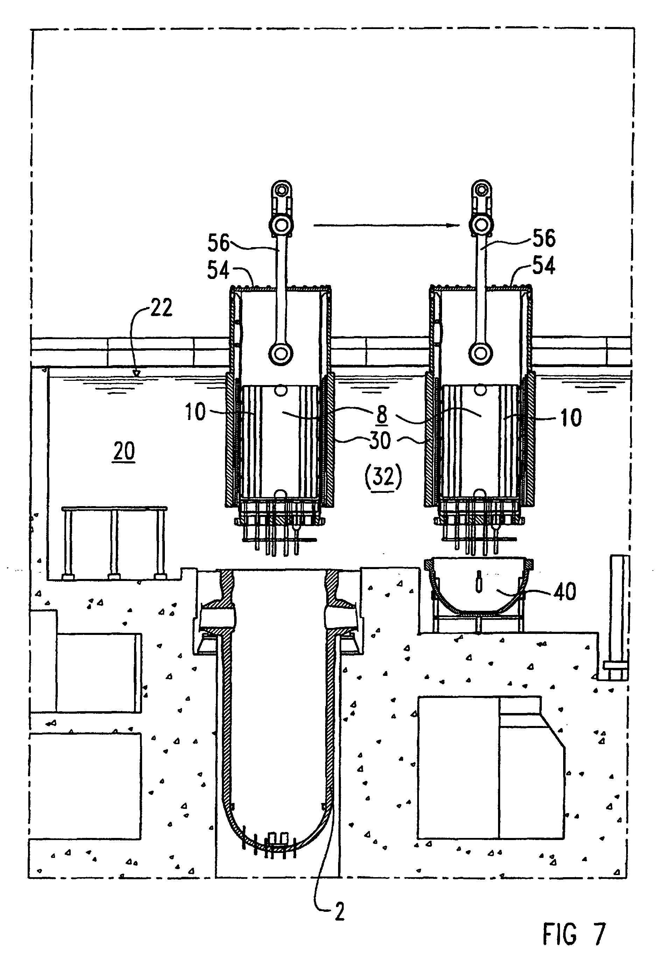

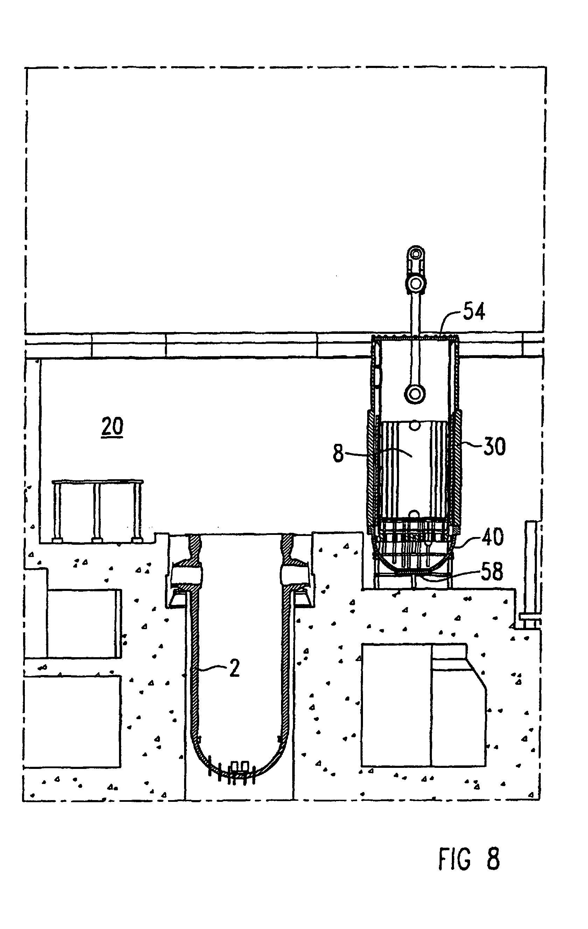

Im nächsten, anhand der **FIG 5 und 6** näher erläuterten Arbeitsschritt wird das obere Teil 30 mit einem Deckel 54 verschraubt, wie es aus dem vergrößerten Teilausschnitt gemäß Figur 6 näher hervorgeht.

Das mit dem Deckel 54 oben verschlossene obere Teil 30 wird mit Hilfe einer an seinem Umfang fixierten und am Gebäudekran eingehängten Tragkonstruktion 56 angehoben und gemäß **FIG 7** seitlich verfahren und über dem unteren Teil 40 positioniert. Das obere Teil 30 wird dabei mit der in ihr eingehängten Komponente 8 nur soweit angehoben, daß die radioaktiv besonders intensiv strahlenden Komponententeile, im Ausführungsbeispiel das Kerngitter 10, beim Transport unter dem Wasserspiegel 22 verbleiben. In der Figur ist außerdem zu erkennen, daß das obere Teil 30 des Behälters 32 in diesem Bereich eine höhere Wandstärke aufweist als in einem darüber angeordneten Bereich, um die hochstrahlenden Teilbereiche der Komponente 8 für einen späteren Transport außerhalb des Wassers möglichst gut abzuschirmen.

Das obere Teil 30 des Behälters 32 wird auf einen Flansch des darunter abgestellten Unterteils 40 aufgesetzt und mit diesem Flansch beispielsweise durch Verschrauben zusammengefügt. Der aus dem oberen Teil 30, dem unteren Teil 40 und dem Deckel 54 gebildete Behälter 32 ist in diesem Zustand bis über das Niveau des unteren Kerngitters 10 mit Wasser gefüllt. Vor dem Weitertransport des Behälters 32 wird dieses Wasser über eine im unteren Teil 40 angeordnete verschließbare Öffnung 58 entleert. Dieser Entleerungsvorgang kann während oder kurz nach dem Entleeren des Reaktorbeckens 20 oder während oder unmittelbar nach dem Herausheben des Behälters 32 aus dem Reaktorbecken 20 erfolgen.

## Patentansprüche

1. Verfahren zum Entsorgen einer in einem Reaktordruckbehälter (2) einer Kernreaktoranlage angeordneten Komponente (8), insbesondere eines unteren Kerngerüstes einer Druckwasserreaktoranlage, mit folgenden Verfahrensschritten:
a) Über dem geöffneten und in einem gefluteten Reaktorbecken (20) angeordneten Reaktordruckbehälter (2) wird ein mit einer unteren Öffnung (28) versehenes oberes Teil (30) eines zum Weitertransport vorgesehenen Behälters (32) angeordnet, das sich wenigstens mit einem Teil seines Innenraumes unterhalb des Wasserspiegels (22) des gefluteten Reaktorbeckens (20) befindet,
b) die Komponente (8) wird mit einem Hebezeug (38) aufgenommen, durch die untere Öffnung (28) in das obere Teil (30) des Behälters (32) angehoben, und
c) zu einem oben offenen und neben dem Reaktordruckbehälter (2) und im gefluteten Reaktorbecken (20) angeordneten unteren Teil (40) des Behälters (32) transportiert wird und auf diesen aufgesetzt,
d) das obere Teil (30) wird mit dem unteren Teil (40) zum Behälter (32) zusammengefügt, so daß die Komponente (8) im Behälter (32) eingeschlossen ist.

2. Verfahren nach Anspruch 1, bei dem durch eine obere Öffnung (35) des oberen Teils (30) eine Tragkonstruktion des Hebezeugs geführt und an der Komponente (8) befestigt wird.

3. Verfahren nach Anspruch 2, bei dem die obere Öffnung (35) des oberen Teils (30) des Behälters (32) vor dem Transport zu seinem unteren Teil (40) mit einem Deckel (54) verschlossen wird.

4. Verfahren nach Anspruch 3, bei dem das im Behälter (32) eingeschlossenene Wasser über eine im unteren Teil (40) des Behälters (32) angeordnete verschließbare Öffnung (58) in das Reaktorbecken (20) abgelassen wird.

## Claims

1. Method for disposing of a component (8) arranged in a reactor pressure vessel (2) of a nuclear reactor plant, said component being, in particular, a lower core structure of a pressurized water reactor plant, having the following method steps:
a) an upper part (30) of a container (32) provided for further transport is arranged above the opened reactor pressure vessel (2) arranged in a flooded reactor well (20), said upper part being provided with a lower orifice (28) and being located at least with part of its interior below the water level (22) of the flooded reactor well (20),
b) the component (8) is picked up by a lifting appliance (38), is raised through the lower orifice (28) into the upper part (30) of the container (32), and
c) is transported to an upwardly open lower part (40) of the container (32), said lower part being arranged next to the reactor pressure vessel (2) and in the flooded reactor well (20) and is placed onto said lower part,
d) the upper part (30) is assembled together with the lower part (40) to form the container (32), so that the component (8) is enclosed in the container (32).

2. Method according to Claim 1, wherein a carrying structure of the lifting appliance is guided through an upper orifice (35) of the upper part (30) and is fastened to the component (8).

3. Method according to Claim 2, wherein the upper orifice (35) of the upper part (30) of the container (32) is closed at the lower part (40) of the latter by means of a cover (54) before transport.

4. Method according to claim 3, wherein the water enclosed in the container (32) is drained off into the reactor well (20) via a closable orifice (58) arranged in the lower part (40) of the container (32).

## Revendications

1. Procédé pour enlever un élément (8) disposé dans la cuve (2) sous pression du réacteur d'une installation à réacteur nucléaire, notamment l'ossature nucléaire inférieure d'une installation à réacteur à eau sous pression, comprenant les stades suivants de procédé :
a) on met au-dessus de la cuve (2) sous pression de réacteur, ouverte et placée dans un bassin (20) pour réacteur qui est rempli, une partie (30) supérieure munie d'une ouverture (28) d'une cuve (32) qui est prévue pour être transportée plus loin et qui se trouve au moins par une partie de son espace intérieur en dessous du niveau (22) de l'eau dans le bassin (20) pour réacteur qui est rempli,
b) on prend l'élément (8) à l'aide d'un engin (38) de levage, et on le soulève en le faisant passer par l'ouverture (28) inférieure de la partie (30) supérieure de la cuve (32), et
c) on le transporte et on le met dans une partie (40) inférieure de la cuve (32), partie qui est ouverte vers le haut et qui est disposée à côté de la cuve (2) sous pression du réacteur et dans le bassin (20) pour réacteur qui est rempli,
d) on assemble la partie (30) supérieure à la partie (40) inférieure en une cuve (32) de sorte que l'élément (28) est enfermé dans la cuve (32).

2. Procédé suivant la revendication 1, dans lequel on guide par une ouverture (35) supérieure de la partie (30) supérieure une construction de support de l'engin de levage et on la fixe à l'élément (8).

3. Procédé suivant la revendication 2, dans lequel on ferme l'ouverture (35) supérieure de la partie (30) supérieure de la cuve (32) à l'aide d'un couvercle (54) avant de la transporter vers sa partie (40) inférieure.

4. Procédé suivant la revendication 3, dans lequel on évacue dans le bassin (20) pour réacteur l'eau enfermée dans la cuve (32) en passant par une ouverture (58) qui peut être fermée et qui est disposée dans la partie (40) inférieure de la cuve (32).
